# EUROPEAN PATENT SPECIFICATION

(11) **EP 3 268 552 B1**
(45) Date of publication and mention of the grant of the patent: **27.02.2019**
(21) Application number: 16723821.1
(22) Date of filing: 09.03.2016
(51) Int. Cl.: E04B 7/12, A01G 9/24, A01G 9/14

(54) **GREENHOUSE**
GEWÄCHSHAUS
SERRE

(30) Priority: 10.03.2015 IT FI20150066
(43) Date of publication of application: 17.01.2018
(73) Proprietor: Artigianfer di Virgilio Cardelli S.r.l., 51010 S.Lucia Uzzanese (PT) (IT)
(72) Inventor: CARDELLI, Massimo, 51010 Uzzano (PT) (IT)
(74) Representative: Mannucci, Michele
(86) International application number: PCT/IB2016/051340
(87) International publication number: WO 2016/142883

(56) References cited:
- DE-A1- 2 502 670
- FR-A1- 2 137 124
- US-A- 5 655 335

## Description

### TECHNICAL FIELD

The present invention relates to the greenhouse production sector, and more in particular the subject matter of the invention is a greenhouse with a roof, in which the covering is integrated in the structural elements of the roof.

### State of the art

Greenhouse cultivation has been known for hundreds of years. Currently, the most commonly used types of greenhouses are formed by buildings whose roofs have coverings made of sheets of glass, sheets made of plastic material or coverings made of a film of plastic material, naturally all capable of allowing sunlight to pass through.

The roofs can be formed of sloping flat pitches opposite relative to the ridge of the roof, generally made of sheets of glass or plastic material, or also of barrel-vaulted corrugated structures, typically made of films of plastic material. A roof can comprise a single ridge with only two opposite sloping pitches (or a single barrel vault) or multiple ridges aligned parallel to each other. A greenhouse structure and roof structures are known from document US-A-5655335.

To allow aeration of the greenhouse from above, some types have pitches with portions thereof tilting between a closed position and an open position.

In general, the structures of the roofs are provided with supporting trusses and, above the trusses, structures carrying the covering elements that comprise the aforesaid sloping pitches or barrel vaults.

Moreover, added to these structures there are further supporting structures made of cloths for insulating, shading or reflecting.

This construction method can be complex to assemble and can therefore require some time for installation.

Moreover, with roofs of these types, the operations for seasonal assembly and disassembly of the coverings, for example of the film of plastic material, or of the cloths for shading, can be difficult, with evident loss of time and risks for the safety of the operators, who have to climb onto the roof.

### Object and summary of the invention

The aim of the present invention is to solve the aforesaid problems in greenhouses of known type.

Within this aim, an important object of the present invention is to produce a greenhouse with covering structurally integrated in the roof that facilitates the assembly and disassembly of the same greenhouse. Another important object of the present invention is to produce a greenhouse that facilitates assembly and removal of the covering cloths.

Yet another important object of the present invention is to produce a greenhouse with covering structurally integrated in the roof that allows easy airing of the greenhouse.

One more important object of the present invention is to produce a greenhouse that is modular in construction.

This aim, these and other objects, which will be more apparent below, are achieved with a greenhouse comprising the features of claim 1; in practice, the covering is supported within the space defined by the lower and upper faces respectively of the lower and upper stringers of the trusses.

In this way, the roof of the greenhouse is formed by modular elements, namely the trusses, which contain the covering and, above all, the covering components, greatly facilitating assembly thereof.

Preferably, the trusses comprise a plurality of diagonal rods to support sloping covering pitches. Preferably, the trusses comprise a plurality of vertical rods for connecting the lower and upper stringers. The diagonal rods are fixed by the respective upper ends to the vertical rods and by the respective lower ends to the lower stringers. This structure allows optimization of the spaces in the trusses for housing the covering.

Conveniently, gutters can be arranged in the areas of common convergence at the bottom of contiguous pitches; preferably, contiguous pairs of the diagonal rods defining the supports of said contiguous pitches are fastened to respective lower stringers with interposing of a space for housing a respective said gutter. In this way, assembly of the gutters is also greatly facilitated.

Preferably, the covering comprises sloping pitches to define, in pairs of adjacent pitches, areas of common convergence at the bottom and upper ridges; advantageously, the sloping pitches follow the diagonal rods of the truss. With this construction of the roof, particularly compact spaces can be obtained and the number of elements required to form the total construction of the greenhouse can be reduced.

Preferably, the covering comprises a flexible covering film at least partially transparent to light and/or sheets made of material at least partially transparent to light.

According to preferred embodiments, the greenhouse comprises means for opening/closing at least one portion of the covering of said roof, to allow airing of the greenhouse from above.

Preferably, the covering can comprise a flexible covering film at least partially transparent to light combined with opening/closing means that comprise:
- a roller for winding said film, oriented with its winding axis orthogonal to the planes of the trusses,
- a device for sliding said roller along corresponding guides associated with said trusses,
- a device for rotating said roller to wind/unwind the film,
so that said roller is adapted to slide downward along said corresponding guides and simultaneously to rotate on its axis to unwind the film, and vice versa, to slide upward along said guides and simultaneously to rotate on its axis to wind said film.

Preferably, these guides are produced along respective diagonal rods of said truss.

According to embodiments, the opening/closing means of at least one portion of the covering of the roof can comprise openable windows. Preferably, said openable windows are tilting according to an axis parallel to the ridges of the sloping pitches.

According to preferred embodiments, the greenhouse comprises at least one cloth for insulating and/or shading and/or reflecting the sun's rays/heat associated directly with one or more of the lower stringers of said trusses and/or with one or more of the upper stringers of said trusses.

Preferably, the greenhouse comprises at least three of said trusses placed side by side correspondingly, there being provided at least a first cloth between a first pair of lower stringers and at least a second cloth between the subsequent pair of lower stringers, and/or at least one cloth between a first pair of upper stringers and at least a further cloth between the second pair of upper stringers.

Conveniently, there can be comprised means for movement, preferably drawn by a wire, of said at least one cloth arranged transverse to the stringers with which it is associated; preferably, said at least one cloth is moved from a stacked back position, preferably folded in a concertina arrangement, or rolled up, against a lower or upper stringer, corresponding to a position not in use, to an unrolled position, to cover at least the space up to the subsequent lower or upper stringer, and vice versa.

### Brief description of the drawings

Further characteristics and advantages of the invention will become more apparent from the description of preferred but non-exclusive embodiments thereof, illustrated by way of non-limiting example in the accompanying drawings, wherein:
Fig. 1 represents a schematic axonometric view of a portion of greenhouse according to the invention;
Fig. 2 represents an enlargement of a portion of the roof of the greenhouse of Fig. 1;
Fig. 3 represents a schematic front view of a portion of greenhouse of Fig. 1;
Fig. 4 represents a schematic front view of some elements of the roof of the greenhouse of Fig. 1;
Fig. 5 represents a schematic front view of a portion of greenhouse varying with respect to that of the preceding figures.

### Detailed description of an embodiment of the invention

With reference to the previously cited figures, a greenhouse according to the invention is indicated as a whole with the number 10.

The greenhouse 10 is provided with a roof 11, which comprises a plurality of trusses 12 substantially identical to one another, arranged parallel, preferably equidistant, according to the longitudinal direction X, i.e. the depth of the greenhouse, or the direction orthogonal to the plane of the trusses.

Each truss 12 comprises an upper stringer 13, a lower stringer 14, vertical rods 15 and diagonal rods 16. The connection nodes of stringers and rods are substantially rigid, for example produced by means of plates or sleeves fastened by threaded connections, or also by welding.

Preferably, there are provided two vertical end rods 15A and one vertical central rod 15B. Moreover, there are also provided other intermediate vertical rods 15.

Between subsequent vertical rods 15, there are provided diagonal rods 16, arranged sloping in the opposite direction to one another, for example by around 45°, to produce typical substantially triangular truss structures.

More in particular, preferably, the diagonal rods 16 are fastened by the respective upper ends to the vertical rods 15 and by the respective lower ends to the lower stringers 14.

The trusses 12 are connected in the longitudinal direction of the greenhouse, by longitudinal rods 17, for example fastened to the same trusses in the areas in which the diagonal rods 16 are fastened to the vertical rods 15.

Moreover, as better explained below, there are provided gutters 18 arranged in the longitudinal direction of the greenhouse, fastened to the lower stringers 14 of the trusses 12, connecting these latter longitudinally to one another. In particular, in this example, the pairs of diagonal rods 16 of one truss that converge toward the common area of fastening to the lower stringer 14, are fastened thereto with interposing of a space for housing a respective gutter 18.

Advantageously, the covering of the roof 11 is arranged between the lower 14 and upper 13 stringers of the trusses 12, i.e. is produced neither above nor below the trusses.

Preferably, the covering is produced by pairs of substantially flat adjacent sloping pitches 20, with opposite slope, which provide, in pairs, areas of common convergence at the bottom and upper ridges. The covering is in practice, in this example, a sequence of sloping pitches. It is understood that in other examples the ridges could be produced in the common area of sloping pitches and vertical pitches. The upper ridges are, for example, produced by longitudinal caps 19 fastened on the longitudinal rods 17, in practice press formed profiles, on which the pitch coverings are fastened.

Conveniently, in this example, the sloping pitches 20 follow the diagonal rods 16 of the trusses 12 and, more in particular, these diagonal rods support the pitches 20.

Preferably, the greenhouse is provided with means 21 for opening/closing part of the covering of the roof, to allow airing of the greenhouse from above.

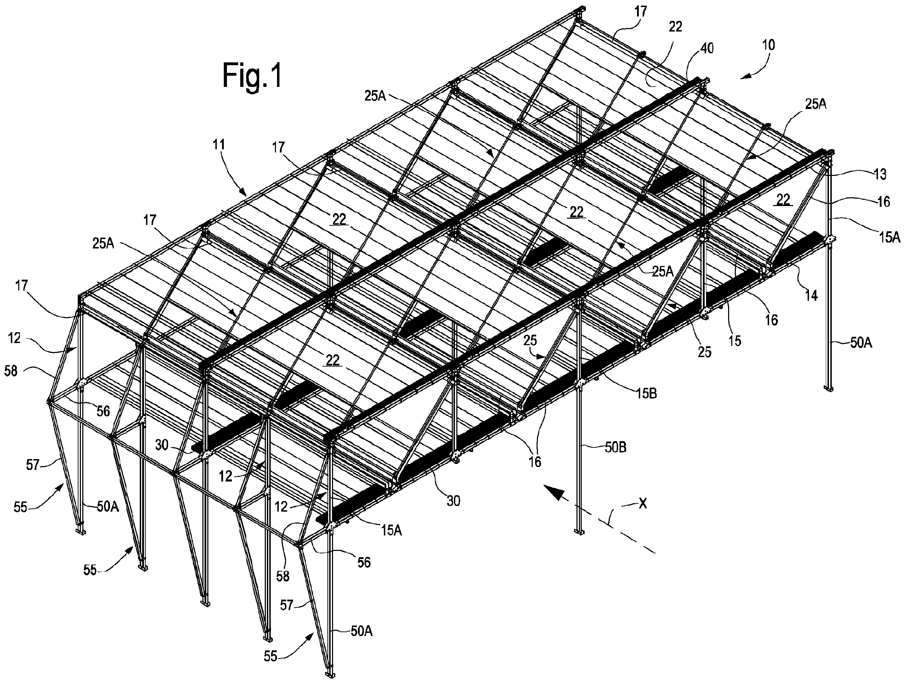

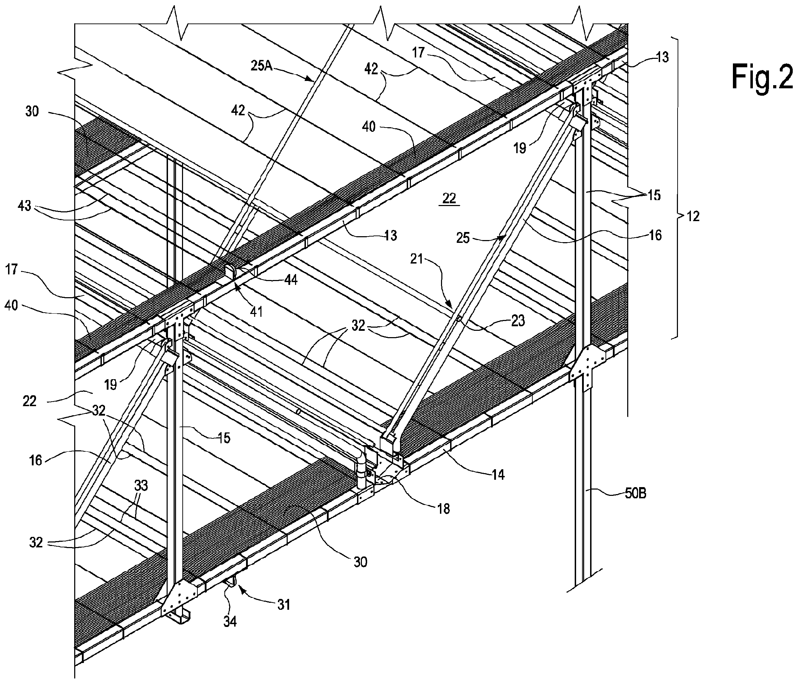

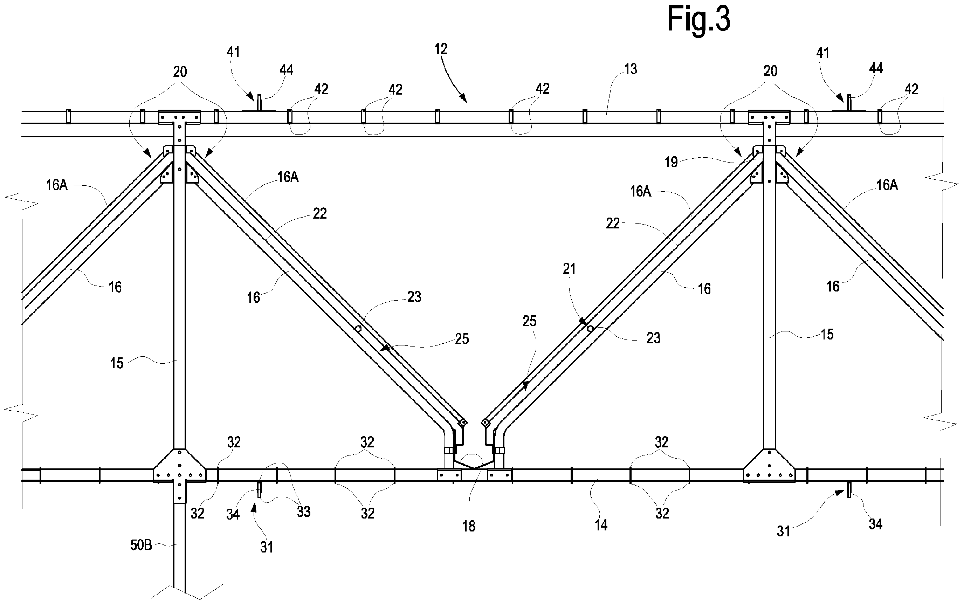

With particular reference to Figs. 1, 2 and 3, the greenhouse comprises a flexible covering film 22, transparent to light, for example made of PVC. With this film, the opening/closing means 21 comprise a roller 23 for winding of the film 22, oriented with its winding axis orthogonal to the planes of the trusses 12, i.e. parallel to the longitudinal direction X of the greenhouse. These means 21 also comprise a first device for sliding the roller 23 comprising sliding guides 25 associated with the diagonal rods 16 and a second device for rotating the roller 23 to wind/unwind the film, not shown in the figures. In practice, when the covering is open to allow airing of the greenhouse, the film 22 associated with a roller 23 is wound on the same roller and the roller is in the upper end of travel position of the sliding guide 25, or the related pitch is "open". An upper edge of the film 22 is fastened to a related longitudinal cap 19, while the rest of the film is wound on the roller. Activating the opening/closing means to close the covering, the roller is made to slide downward along the guides 25 and, simultaneously, the roller 23 is made to rotate to unwind the film (an edge is fastened to the ridge of the roof by the longitudinal cap 19), which thus covers the related pitch, producing the covering. Vice versa, to allow opening, the roller is made to rotate and simultaneously slide in the opposite directions to those of closing.

The device for sliding the roller and the device for rotating the roller, and their synchronized operation, are not described or represented in the figures, for simplicity, as they are within the knowledge of those skilled in the art. For example, the axis of the roller can be integral with a toothed wheel meshed with a rack parallel to the guide 25, and the same axis of the roller can be moved by an actuator along the guide 25, so that during sliding thereon, the toothed wheel is obliged to rotate, performing winding/unwinding of the belt. Naturally, the drive mechanisms that allow movement of the roller can be of manual, or motorized, and therefore automated, type to allow remote control and programming of opening/closing according to time and/or environmental parameters.

The guides 25 are, for example, produced below by the diagonal rods 16 and above by secondary oblique rods 16A parallel thereto, for example fastened at an upper end to the vertical rods 15, and at the lower end on the diagonal rods 16, so that the rollers 23 are constrained to slide inside the slots defined between said two rods 16 and 16A.

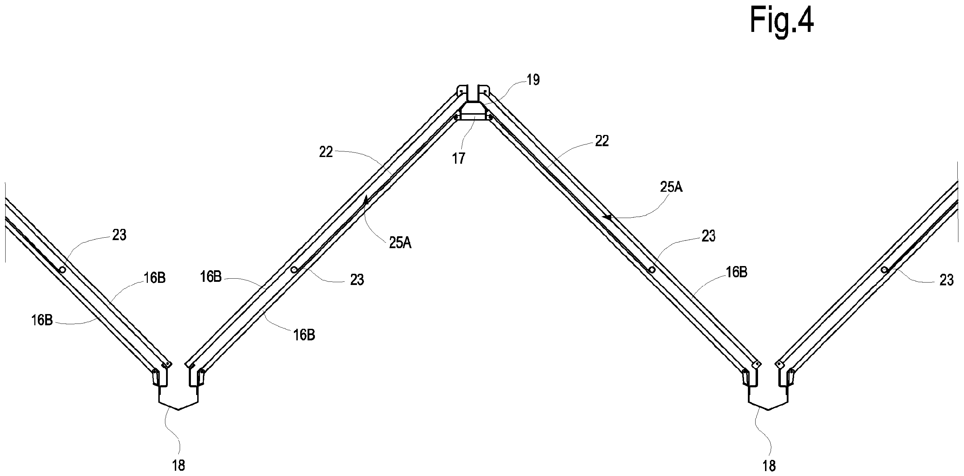

There are also provided sliding guides 25A (visible in detail in Fig. 4), arranged in the areas of the roof between two subsequent trusses, to prevent excessive deformations of the same roller between the trusses, for example formed of two oblique secondary rods 16B superimposed to define the slots in which the roller slides. These two oblique secondary rods 16B are, for example, fastened by the ends thereof to the gutters 18 and by the opposite ends to the longitudinal connecting rods 17 of the subsequent trusses.

Preferably, the roller 23 has a length more or less equal to the longitudinal depth (direction X) of the greenhouse, i.e. of the roof, so that with the movement of a roller it is possible to open or close the whole length of a pitch of the covering. Preferably, there is provided a roller for each pitch. It is understood that it is possible to use rollers with covering films only on some pitches of the roof or also rollers with films that cover only predetermined longitudinal portions of the pitches.

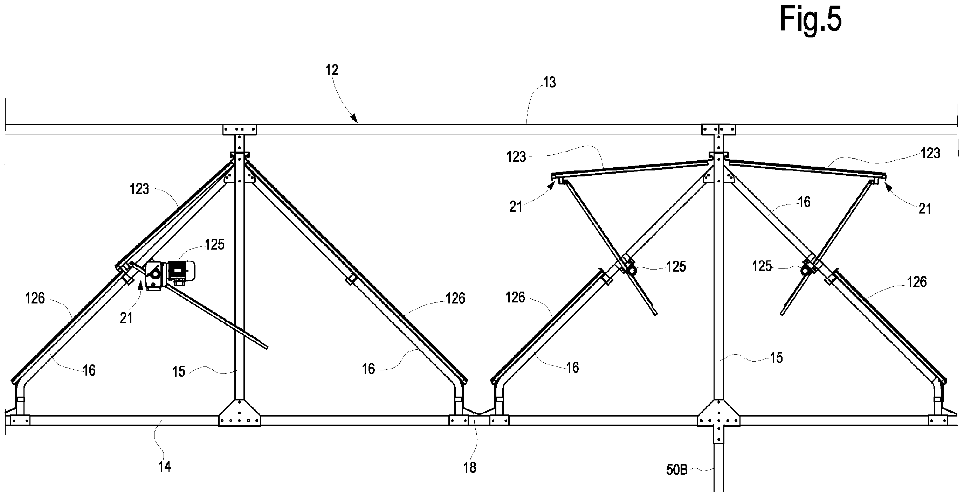

Fig. 5 shows a variant of the opening/closing means 21 of part of the covering of the roof, which consists of openable windows or hatches 123, for example partially made of polyethylene. These openable windows 123 are tilting according to an axis parallel to the ridges of the sloping pitches. Preferably, window cloths are hinged with reference to their upper side and are provided on the part of the pitch closest to the ridges. For example, for the movement of these windows it is possible to use means 125 that comprise rotary slides with telescoping arms, complete with gear motors. It is clear that the windows can occupy the whole of the longitudinal extension of the pitches, or only part of them.

The covering of the greenhouse can also comprise parts made of rigid sheets 126, such as in Fig. 5, flat or corrugated or curved, preferably made of material substantially transparent to light, for example glass.

As said, at the bottom of the pitches, at the lower stringers 14, there are provided gutters 18.

Cloths 30 for insulating are associated directly with the lower stringers 14, to help to maintain the internal temperature of the greenhouse. In this example there are provided cloths 30 for insulating between each truss 12. For example, each cloth 30 is of a width substantially equal to the length of the truss 12. It is understood that, in other examples, there can be provided a cloth for insulating that extends in the space between more than two trusses, or a single cloth for the whole greenhouse. Moreover, there can be provided several adjacent (and optionally partially overlapped) cloths, of a width less than the width of the truss, to cover the total width.

There are provided means 31 for movement of the cloths 30 for insulating, for example drawn by a wire, according to a movement longitudinal to the extension X of the greenhouse, i.e. transverse to the lower stringers. The movement takes place from a stacked back position, preferably folded in a concertina arrangement (as shown in the figures), or rolled up (not shown in the figures), against respective lower stringers, corresponding to a position not in use, to an unrolled position, to cover at least the space up to the subsequent lower stringer (position not shown in the figures) and vice versa.

The cloths 30 are guided and contained between parallel pairs of guide elements 32, such as wires, which extend transverse to the lower stringers and, for example, are arranged in contact with the lower and upper face of the lower stringers, so that the cloths 30 are contained in the depth in height of the lower stringers. The movement of the cloths is given, for example, by drawing wires 33 fastened at least to the outer edges of the cloths, moved between guide pulleys 34, fastened to the lower stringers, of which at least one is preferably motorized to allow automated movement of the cloths.

In place of the cloths 30 for insulating, there can be provided other types of cloths, such as cloths for shading or cloths for reflecting the sun's rays/heat.

Conveniently, in this example, cloths for shading 40 or cloths for reflecting the sun's rays/heat are associated directly with the upper stringers 13. As for the case of the lower stringers, in this example there are provided cloths for shading 40 between each truss 12. For example, each cloth 40 is of a width substantially equal to the length of the truss 12. It is understood that in other examples there can be provided a cloth 40 for shading that extends in the space between more than two trusses, or a single cloth for shading for the whole greenhouse. Moreover, there can be provided several adjacent cloths 40 for shading, of a width less than the width of the truss, to cover the total width.

There are provided means 41 for movement of the cloths 40 for shading, conveniently the same as those associated with the cloths 30 for insulating, associated with the upper stringers 13, for example drawn by a wire, according to a movement longitudinal to the extension X of the greenhouse, i.e. transverse to the upper stringers. The movement takes place from a stacked back position, preferably folded in a concertina arrangement (as shown in the figures), or rolled up (not shown in the figures), against respective lower stringers, corresponding to a position not in use, to an unrolled position, to cover at least the space up to the subsequent upper stringer (position not shown in the figures), and vice versa.

Similarly, the cloths 40 for shading are guided and contained between guide elements 42, such as wires, which extend transverse to the upper stringers and, for example, are arranged in contact at least with the upper face of the upper stringers, and the cloths 40 for shading are contained in the depth in height of the upper stringers. The movement of the cloths is given, for example, by drawing wires 43 fastened at least to the external edges of the cloths, moved between guide pulleys 44, fastened to the upper stringers, one of which is preferably motorized to allow automated movement of the cloths.

From a structural point of view, the greenhouse has a depth, i.e. a longitudinal length according to the direction X, that depends on the number of trusses 12 used. In practice, given a truss 12, this determines the width of the greenhouse, while the depth is given by the number of trusses. It is understood that it would also be possible to use several trusses arranged adjacent to one another on the same plane and connected, for example, by means of plates and bolts, in practice to produce modular trusses composed of single modules as describe above.

The roof is supported by uprights and, more in particular, the greenhouse comprises, for each truss 12, lateral uprights 50A aligned with respective vertical end rods 15A of the truss 12, adapted to support the same truss. Preferably, there is also provided a central upright 50B, aligned with the central vertical axis 15B of the truss.

Along the lateral perimeter of the greenhouse, as is customary, there are preferably provided lateral filling panels, not shown in the figures, for example corrugated panels made of plastic material, transparent sheets or transparent films.

At least at one of the two lateral uprights, there is provided a reinforcing structure 55 comprising a portion 56 of rod that is a continuation of the lower stringer 14 of the truss 12, a first sloping rod 57 fastened at one end to the lateral upright 50A and at the opposite end to the rod portion 56, and a second sloping rod 58 fastened at one end to the vertical rod and at the opposite end to said rod portion.

It is understood that the drawing only shows possible non-limiting embodiments of the invention, which can vary in forms and arrangements without however departing from the scope of the concept on which the invention is based. Any reference numerals in the appended claims are provided purely to facilitate the reading thereof, in the light of the above description and accompanying drawings, and do not in any way limit the scope of protection.

## Claims

1. Greenhouse (10) comprising a roof (11) provided with at least two trusses (12) arranged parallel, said trusses comprising an upper stringer (13), a lower stringer (14) and vertical (15, 15A, 15B) and/or diagonal rods (16), **characterized in that** the covering of said roof (11) is arranged between said lower (14) and upper (13) stringers of said at least two trusses (12).

2. Greenhouse according to claim 1, wherein said trusses (12) comprise a plurality of diagonal rods (16) to support sloping covering pitches (20).

3. Greenhouse according to claim 2, wherein said trusses (12) comprise a plurality of vertical rods (15, 15A, 15B) for connecting said lower (14) and upper (13) stringers, said diagonal rods (16) being fastened by the respective upper ends to said vertical rods (15, 15A, 15B) and by the respective lower ends to said lower stringers (14).

4. Greenhouse according to claim 2 or 3, comprising gutters (18) arranged in the areas of common convergence at the bottom of contiguous pitches (20); preferably, contiguous pairs of said diagonal rods (16) defining the supports of said contiguous pitches being fastened to respective lower stringers (14) with interposing of a space for housing a respective said gutter (18).

5. Greenhouse according to one or more of the preceding claims, wherein said covering comprises sloping pitches (20) to define, in pairs of adjacent pitches, areas of common convergence at the bottom and upper ridges, said sloping pitches following said diagonal rods (16) of the truss (12).

6. Greenhouse according to one or more of the preceding claims, wherein said covering comprises a flexible covering film (22) at least partially transparent to light and/or sheets made of material at least partially transparent to light.

7. Greenhouse according to one or more of the preceding claims, comprising means (21) for opening/closing at least one portion of said covering of said roof (11), to allow airing of the greenhouse from above.

8. Greenhouse according to claims 2 and 7, wherein said covering comprises a flexible covering film (22) at least partially transparent to light; said opening/closing means (21) comprising:
- a roller (23) for winding said film (22), oriented with its winding axis orthogonal to the planes of the trusses (12),
- a device for sliding said roller along corresponding guides (25) associated with said trusses (12),
- a device for rotating said roller (239 to wind/unwind the film (22),
so that said roller (23) is adapted to slide downward along said corresponding guides (25) and simultaneously to rotate on its axis to unwind the film (22), and vice versa, to slide upward along said guides (25) and simultaneously to rotate on its axis to wind said film (22).

9. Greenhouse according to claims 5 and 8, wherein said guides (25) are produced along respective diagonal rods (16) of said truss. (12)

10. Greenhouse according to claim 7, wherein said opening/closing means (21) of at least one portion of said covering of said roof comprise openable windows (123).

11. Greenhouse according to claims 5 and 10, wherein said openable windows (123) are tilting according to an axis parallel to the ridges of the sloping pitches.

12. Greenhouse according to one or more of the preceding claims, comprising at least one cloth (30, 40) for insulating and/or shading and/or reflecting the sun's rays/heat associated directly with one or more of the lower stringers (14) of said trusses 812) and/or to one or more of the upper stringers (13) of said trusses (14).

13. Greenhouse according to claim 12, comprising at least three of said trusses (12) placed side by side correspondingly, there being provided at least a first cloth (30) between a first pair of lower stringers (14) and at least a second cloth (30) between the subsequent pair of lower stringers, and/or at least one cloth (40) between a first pair of upper stringers and at least a further cloth (40) between the second pair of upper stringers (13).

14. Greenhouse according to claim 12 or 13, comprising means for movement (33, 34, 41), preferably drawn by a wire, of said at least one cloth (30, 40) arranged transverse to the stringers (13, 14) with which it is associated; preferably, said at least one cloth is moved from a stacked back position, preferably folded in a concertina arrangement, or rolled up, against a lower or upper stringer, corresponding to a position not in use, to an unrolled position, to cover at least the space up to the subsequent lower or upper stringer, and vice versa.

15. Greenhouse according to one or more of the preceding claims, comprising, for each truss (12), lateral uprights (50A) aligned with respective vertical end rods (15A) of the truss (12), adapted to support said trusses; at least at one of the two lateral uprights (50A), there being provided a reinforcing structure (55) comprising a portion of rod as an continuation of the lower stringer of the truss, a first sloping rod fastened at one end to said upright and at the opposite end to said portion of rod, and a second sloping rod fastened at one end to said vertical rod and at the opposite end to said portion of rod.

## Patentansprüche

1. Gewächshaus (10) mit einem Dach (11) mit mindestens zwei Tragwerken (12), die parallel angeordnet sind, wobei die Tragwerke einen oberen Träger (13), einen unteren Träger (14) und vertikale (15, 15A, 15B) und/oder diagonalen Stäbe (16) aufweisen, **dadurch gekennzeichnet, dass** die Abdeckung des Daches (11) zwischen den unteren (14) und den oberen (13) Trägern der mindestens zwei Tragwerke (12) angeordnet ist.

2. Gewächshaus nach Anspruch 1, wobei die Tragwerke (12) eine Anzahl von diagonalen Stäben (16) aufweisen, um geneigte Abdeckungsfelder (20) zu tragen.

3. Gewächshaus noch Anspruch 2, wobei die Tragwerke (12) eine Anzahl von vertikalen Stäben (15, 15A, 15B) zur Verbindung der unteren (14) und der oberen (13) Träger aufweisen, wobei die diagonalen Stäbe (16) durch die jeweiligen oberen Enden mit den vertikalen Stäben (15, 15A, 15B) und mit den jeweiligen unteren Enden mit den unteren Trägern (14) verbunden sind.

4. Gewächshaus nach Anspruch 2 oder 3 mit Dachrinnen (18), die in den Bereichen der gemeinsamen Konvergenz am Unterteil von zusammenhängenden Feldern (20) angeordnet sind, wobei vorzugsweise zusammenhängende Paare von diagonalen Stäben (16), die Stützen der zusammenhängenden Felder bilden, an den jeweiligen unteren Trägern (14) befestigt sind, wobei ein Raum zur Aufnahme einer jeweiligen Regenrinne (18) eingefügt ist.

5. Gewächshaus nach einem oder mehreren der vorstehenden Ansprüche, wobei die Abdeckung geneigte Felder (20) aufweist, um in Paaren von angrenzenden Feldern Bereiche gemeinsame Konvergenz am unteren und am oberen First zu bilden, wobei die geneigten Felder den diagonalen Stäben (16) des Tragwerks (12) folgen.

6. Gewächshaus nach einem oder mehreren der vorstehenden Ansprüche, wobei die Abdeckung einen flexiblen Abdeckfilm (22) aufweist, der mindestens teilweise transparent für Licht ist, und/oder Platten, die mindestens teilweise transparent für Licht sind.

7. Gewächshaus nach einem oder mehreren der vorstehenden Ansprüche mit einer Einrichtung (21) zum Öffnen/Schließen mindestens eines Teils der Abdeckung des Daches (11) um eine Belüftung des Gewächshauses von oben zu ermöglichen.

8. Gewächshaus nach Anspruch 2 und 7, wobei die Abdeckung einen flexiblen Abdeckfilm (22) aufweist, der mindestens teilweise v für Licht transparent ist, wobei die Öffnungs/Schließeinrichtung (21) aufweist:
eine Rolle (23) zum Aufwickeln des Films (22), die mit ihrer Wickelachse orthogonal zu den Ebenen der Tragwerke (12) orientiert ist,
eine Vorrichtung zum Verschieben der Rolle entlang entsprechender Führungen (25) die den Tragwerken (12) zugeordnet sind,
eine Vorrichtung zum Drehen der Rolle (23) zum Aufwickeln/Abwickeln des Films (22), sodass die Rolle (23) ausgebildet ist, um entlang der entsprechenden Führungen (24) sich nach unten zu verschieben und gleichzeitig auf ihrer Achse zu drehen, um den Film (22) abzuwickeln umgekehrt, sich nach oben entlang der Führungen (24) zu verschieben und gleichzeitig auf ihrer Achse zu drehen, um den Film (22) aufzuwickeln.

9. Gewächshaus nach Anspruch 5 und 8, wobei die Führungen (24) entlang jeweiliger diagonaler Stäbe (16) des Tragwerks (12) ausgebildet sind.

10. Gewächshaus nach Anspruch 7, wobei die Öffnungs/Schließeinrichtung (21) von mindestens einem Teil der Abdeckung des Daches zu öffnende Fenster aufweist.

11. Gewächshaus nach den Ansprüchen 5 und 10, wobei die zu öffnenden Fenster (123) bezüglich einer Achse schwenken, die parallel zu den Firsten der geneigten Felder ist.

12. Gewächshaus nach einem oder mehreren der vorstehenden Ansprüche mit mindestens einem Gewebe (30, 40) zum Isolieren und/oder Abschirmen und/oder zur Reflexion von Sonnenstrahlen/Wärme, das direkt einem oder mehreren der unteren Träger (14) der Tragwerke (12) und/oder einem oder mehreren der oberen Träger (13) der Tragwerke (14) zugeordnet ist.

13. Gewächshaus nach Anspruch 12 mit mindestens drei der Tragwerke (12), die jeweils Seite an Seite angeordnet sind, wobei mindestens ein erstes Gewebe (30) zwischen einem ersten Paar der unteren Träger (14) und mindestens ein zweites Gewebe (30) zwischen dem folgenden Paar der unteren Träger und/oder mindestens ein Gewebe (40) zwischen einem ersten Paar der oberen Träger und mindestens ein weiteres Gewebe (40) zwischen dem zweiten Paar der oberen Träger (13) vorgesehen ist.

14. Gewächshaus nach Anspruch 12 oder 13 mit einer Einrichtung zur Bewegung (33, 34, 41), vorzugsweise durch einen Draht gezogen, des mindestens einen Gewebes (30, 40), das quer zu den Trägern (13, 14) angeordnet ist, denen es zugeordnet ist, wobei vorzugsweise das mindestens eine Gewebe von einer gestapelten Rückposition, vorzugsweise in einem ziehharmonikaähnlichen Falten oder aufgerollt, gegen einen unteren oder einen oberen Träger entsprechend einer Position nicht im Gebrauch, zu einer abgewickelten Position bewegt wird, um mindestens den Raum bis zu dem folgenden unteren oder oberen Träger und umgekehrt abzudecken.

15. Gewächshaus nach einem oder mehreren der vorstehenden Ansprüche mit, für jedes Tragwerk (12), seitlichen Ständern (50A), die mit den jeweiligen vertikalen Endstäben (15A) des Tragwerks (12) ausgerichtet sind, die ausgebildet sind, um die Tragwerke zu stützen, wobei mindestens einer der beiden seitlichen Ständer (50A) mit einer Verstärkungsstruktur (55) versehen ist, mit einem Teil des Stabs als Fortsetzung des unteren Trägers des Tragwerks, wobei ein erster geneigter Stab an einem Ende des Ständers befestigt ist und an dem entgegengesetzten Ende an dem Teil des Stabs und ein zweiter geneigter Stab an dem einen Ende an dem vertikalen Stab befestigt ist und mit dem gegenüberliegenden Ende an dem Teil des Stabs.

## Revendications

1. Serre (10) comprenant un toit (11) pourvu d'au moins deux treillis (12) agencés parallèlement, lesdits treillis comprenant un longeron supérieur (13), un longeron inférieur (14) et vertical (15, 15A, 15B) et/ou des barres diagonales (16), **caractérisée en ce que** la couverture dudit toit (11) est agencée entre lesdits longerons inférieur (14) et supérieur (13) desdits treillis (12).

2. Serre selon la revendication 1, dans laquelle lesdits treillis (12) comprennent une pluralité de barres diagonales (16) pour supporter des nappes de couverture en pente (20).

3. Serre selon la revendication 2, dans laquelle lesdits treillis (12) comprennent une pluralité de barres verticales (15, 15A, 15B) pour relier lesdits longerons inférieur (14) et supérieur (13), lesdites barres diagonales (16) étant fixées par des extrémités supérieures respectives auxdites barres verticales (15, 15A, 15B) et par les extrémités inférieures respectives auxdits longerons inférieurs (14).

4. Serre selon la revendication 2 ou 3, comprenant des gouttières (18) agencées dans les zones de convergence commune en bas de nappes contigües (20) ; de préférence des paires contigües desdites barres diagonales (16) formant les supports desdites nappes contigües étant fixées à des longerons inférieurs respectifs (14) avec aménagement d'un espace pour loger une gouttière respective (18).

5. Serre selon une ou plusieurs des revendications précédentes, dans laquelle ladite couverture comprend des nappes en pente (20), pour former, en paires de nappes adjacentes, des zones de convergence commune en bas et des crêtes supérieures, lesdites nappes en pente suivant lesdites barres diagonales (16) des treillis (12).

6. Serre selon une ou plusieurs des revendications précédentes, dans laquelle ladite couverture comprend un film de couverture flexible (22) au moins partiellement transparent à la lumière et/ou des feuilles faites d'un matériau au moins partiellement transparent à la lumière.

7. Serre selon une ou plusieurs des revendications précédentes, comprenant des moyens (21) pour ouvrir/fermer au moins une partie de ladite couverture dudit toit (11), pour permettre une aération de la serre par le dessus.

8. Serre selon les revendications 2 et 7, dans laquelle ladite couverture comprend un film de couverture flexible (22) au moins partiellement transparent à la lumière ; lesdits moyens d'ouverture/fermeture (21) comprenant :
- un rouleau (23) pour enrouler ledit film (22), orienté avec son axe d'enroulement perpendiculaire aux plans des treillis (12),
- un dispositif pour faire glisser ledit rouleau le long de guides correspondants (25) associés avec lesdits treillis (12),
- un dispositif pour faire tourner ledit rouleau (23) pour enrouler/dérouler le film (22), de sorte que ledit rouleau (23) soit adapté pour glisser vers le bas le long desdits guides correspondants (25) et tourner simultanément sur son axe pour dérouler le film (22), et vice-versa, pour glisser vers le haut le long desdits guides (25) et tourner simultanément sur son axe pour enrouler ledit film (22).

9. Serre selon les revendications 5 et 8, dans laquelle lesdits guides (25) sont produits le long de barres diagonales respectives (16) desdits treillis (12).

10. Serre selon la revendication 7, dans laquelle lesdits moyens d'ouverture/fermeture (21) d'au moins une partie de ladite couverture dudit toit comprennent des fenêtres ouvrables (123).

11. Serre selon les revendications 5 et 10, dans laquelle lesdites fenêtres ouvrables (123) sont inclinables selon un axe parallèle aux crêtes des nappes en pente.

12. Serre selon une ou plusieurs des revendications précédentes, comprenant au moins un tissu (30, 40) pour isoler et/ou obscurcir et/ou refléter les rayons du soleil/la chaleur associés directement à un ou plusieurs des longerons inférieurs (14) desdits treillis (12) et/ou à un ou plusieurs des longerons supérieures (13) desdits treillis (14).

13. Serre selon la revendication 12, comprenant au moins trois desdits treillis (12) placés côte-à-côte en correspondance, au moins un premier tissu (30) étant prévu entre une première paire de longerons inférieurs (14) et au moins un deuxième tissu (30) entre la paire suivante de longerons inférieurs, et/ou au moins un tissu (40) entre une première paire de longerons supérieurs et au moins un autre tissu (40) entre la deuxième paire de longerons supérieurs (13).

14. Serre selon la revendication 12 ou 13, comprenant des moyens de mouvement (33, 34, 41), de préférence entraînés par un fil, dudit ou desdits tissu(s) (30, 40) agencé perpendiculairement aux longerons (13, 14) avec lesquels il est associé ; de préférence ledit ou lesdits tissu(s) est(sont) déplacé(s) d'une position arrière d'empilement, de préférence plié en soufflet, ou enroulé, contre un longeron inférieur ou supérieur, correspondant à une position de non utilisation, vers une position déroulée, pour couvrir au moins l'espace allant jusqu'au longeron suivant inférieur ou supérieur, et vice-versa.

15. Serre selon une ou plusieurs des revendications précédentes, comprenant, pour chaque treillis (12), des montants latéraux (50A) alignés avec des barres d'extrémité verticales respectives (15A) du treillis (12), adaptés pour supporter lesdits treillis ; au moins au niveau de l'un des deux montants latéraux (50A), une structure de renforcement (55) étant prévue et comprenant une partie de barre en tant que prolongement du longeron inférieur du treillis, une première barre en pente fixée à une extrémité dudit montant et à l'extrémité opposée à ladite partie de barre, et une deuxième barre en pente fixée à une extrémité à ladite barre verticale et à l'extrémité opposée à ladite partie de barre.
